# EUROPEAN PATENT SPECIFICATION

(11) **EP 3 878 309 B1**
(45) Date of publication and mention of the grant of the patent: **07.06.2023**
(21) Application number: 20162434.3
(22) Date of filing: 11.03.2020
(51) Int. Cl.: A45D 34/04, A45D 40/26, B65D 1/02, B65D 51/32, B29C 70/68, B32B 27/00, B32B 27/08, B32B 27/30, B32B 27/32, B32B 27/34

(54) **A DAUBER APPLICATOR ASSEMBLY AND A MULTI-LAYERED CONTAINER FOR SOLVENT CEMENT PRODUCTS**
TUPFERAPPLIKATORANORDNUNG UND MEHRSCHICHTIGER BEHÄLTER FÜR LÖSUNGSMITTELSCHMELZPRODUKTE
ENSEMBLE D'APPLICATEURS DE BARBOUILLAGE ET CONTENEUR MULTICOUCHE POUR PRODUITS DE CIMENT À SOLVANT

(43) Date of publication of application: 15.09.2021
(73) Proprietor: Pidilite Industries Limited, Mumbai 400002 (IN)
(72) Inventor: Perekh, Madhukar, 40002 Mumbai (IN)
(74) Representative: Meissner Bolte Partnerschaft mbB

(56) References cited:
- US-A- 1 913 526
- US-A- 1 938 373
- US-A- 2 160 517
- US-A1- 2009 226 238

## Description

### TECHNICAL FIELD

The present subject matter described relates to a dauber applicator and a method of manufacturing a dauber applicator assembly.

### BACKGROUND

Plastic pipes such as acrylonitrile butadiene (ABS), Chlorinated polyvinyl chloride (CPVC) and polyvinyl chloride (PVC) pipes are primarily joined by solvent cementing (i.e. by adhesive solvent cement materials). A proper gluing of solvent cement to the surface requires a good quality dauber applicator. Such applicators and containers of solvent cement are manufactured with good quality raw materials as daubers and containers continuously come in contact with the solvent cement gluing liquids. Thus, there is requirement of durable and easy to handle applicator with a good quality container. The existing packaging (i.e. tin containers) used for packing solvent cement face problems of rusting, denting and also may cause injury to the finger while removing product from tin container due to inside sharp edges of tin container.

A long-lasting solvent cementing requires rapid application of correct amount of solvent cement with consistent quality of primers and cements. The length of metal dauber is designed as per container size. The Stock keeping unit SKU) wise metal dauber wire lengths and cotton blob diameter is designed in such a way that there will be no wastage of the product when removed the product from the container. Also, different application surfaces required applicator daubers with different lengths. Very small or very large length of applicator may not apply sufficient amount of solvent cement to the targeted surface. Existing dauber fitment systems with cap and container may have problems regarding the applicator and container durability in many aspects. Existing dauber cap applicators are mainly made up of complete plastic molding with fixed length, metal cap with welded/soldered daubers. It remains a tedious task to fix a metal dauber with a plastic cap by welding or soldering, as there is a possibility of deformation of cap or loose connection of dauber with the cap. Also, a fixed length soldered/welded metal shaft may not remain useful for all length requirements of applicator.

Further, the container material of solvent cement also affects the durability of solvent cement. The material used for plastic multilayer container of the solvent cement must comprise chemical resistant properties. Further, it is desired that the container is non-reactive, rust and dent proof, as well as the inner surface further improving the shelf life and property consistency of solvent to be stored in the container. Existing tin container face problems such as rusting, denting and shorter shelf life.

Documents US1938373 and US1913526 disclose dauber applicators comprising a cap and a dauber metal applicator.

Therefore, it is necessary to construct a full featured plastic multilayer container for solvent cement with a plastic cap and metal dauber connected to the plastic cap, wherein the plastic cap is constructed in such way that metal dauber with multiple lengths can be fitted in the cap, depending on the size of the container.

### SUMMARY

This summary is provided to introduce concepts related to plastic cap metal dauber fitment system with plastic multilayer container.

The above mentioned problems are solved by providing a dauber applicator according to claim 1 and a method of manufacturing a dauber applicator assembly according to claim 10.

In one embodiment, a metal dauber assembly enabled to fit over a plastic multilayer container is described. The assembly comprises a cap, wherein the cap may be a plastic cap. The assembly comprises a cavity inside the plastic cap. The metal dauber applicator wire comprises a first end and a second end, wherein the first end is configured to hold a cotton blob. Further, the second end of the metal dauber applicator wire is shaped into a pattern. The pattern corresponds to a zig-zag, a sinuous, a tilt, a wave, a S-shape, a crooked structure, or an angular bend. Further, a holding means is molded over at second end of the metal dauber applicator wire, wherein the holding means is molded in such way that the holding means press fits in the cavity.

In one embodiment, not according to the present invention, a plastic multilayer container with a metal dauber applicator wire and cap is described. The plastic multilayer container may comprise a first layer inner layer of solvent resistant, chemical resistant thermoplastic polymeric layer. The plastic multilayer container may comprise a second tie layer of thermoplastic resin polymer. The plastic multilayer container may comprise a third central layer of mixture of a high-density polyethylene (HDPE), a thermoplastic polymer and a thermoplastic adhesive resin polymer. The plastic multilayer container may comprise a fourth layer of tie layer, wherein the tie layer may comprise of adhesive resin polymer. The plastic multilayer container may further comprise a fifth outer layer of thermoplastic high-density polyethylene (HDPE). In one embodiment, the third layer/ central layer is produced by reusing scrap trimmed from the multi-layered container during a blow molding process.

In one embodiment, a method of manufacturing of complete bottle comprising cap with metal dauber and plastic multilayer container is described. The method comprises a first step of Shaping the ends and the structure of metal dauber applicator wire. The method comprises a second step of Molding of holding means over metal dauber applicator wire. The method comprises a third step of fitting of a cotton blob to metal wire. The method comprises a fourth step of assembling of holding means in a cavity of a cap. The method comprises a fifth step of fitting of cap assembled with metal applicator dauber over the multi-layered container. The method thereby may comprise a sixth step of manufacturing of complete bottle with cap, metal dauber and plastic multilayer container.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a dauber applicator 100 comprising a cap 101 with a metal dauber applicator wire 104.
Figure 2 illustrates a fitment of a metal dauber holder 103 in to a cavity 102 of the cap 101.
Figure 3 illustrates a first end 302 and a second end 304 of a metal dauber applicator wire 104.
Figure 4 illustrates an assembly 400 of a metal dauber holder103 and the metal dauber applicator wire 104.
Figure 5 illustrates a magnified disclosure of fitment of the metal dauber holder 103 to the cavity 102 of the cap 101.
Figure 6 illustrates a bottle assembly with the cap 101 and a plastic multilayer container.
Figure 7 shows illustration of five-layer of the plastic multilayer container.
Figure 8 illustrates a flow chart 800 of method of manufacturing of assembly of bottle with the cap 101, a metal dauber applicator wire 104 and the plastic multilayer container.

### DETAILED DESCRIPTION

Reference throughout the specification to "various embodiments," "some embodiments," "one embodiment," or "an embodiment" means that a particular feature, structure, or characteristic described in connection with the embodiment is included in at least one embodiment. Thus, appearances of the phrases "in various embodiments," "in some embodiments," "in one embodiment," or "in an embodiment" in places throughout the specification are not necessarily all referring to the same embodiment.

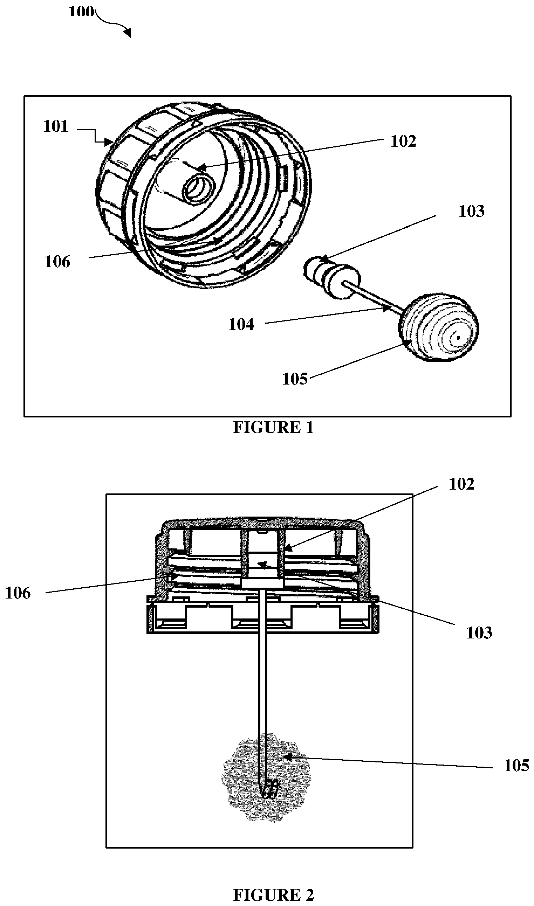

Referring now to figure 1, a dauber applicator 100 comprising a cap 101 with a metal dauber applicator wire 104 is illustrated. In one embodiment the cap 101 may be a plastic cap. In one embodiment, a cavity 102 may be formed inside the cap 101. The cap 101 may comprise an internal thread 106. Further, the assembly 100 comprises a metal dauber applicator wire 104, wherein the metal dauber applicator wire 104 is fitted with cotton blob at first end. The assembly 100 comprises a holding means 103, molded over at second end of the metal applicator dauber wire 104, wherein the holding means 103 is molded in such way that the holding means 103 press fits in the cavity 102 of the cap 101.

Referring to figure 2, fitment of the metal dauber holder 103 into the cavity 102 of the cap 101, is illustrated. The fitment may eliminate welding/soldering process of the metal dauber applicator wire 104 to the cap 101 of the container and may further facilitate the use of same fitment for one or more lengths of metal dauber applicator wire 104. The length of metal dauber applicator wire may range within 1 cm to 150 cm.

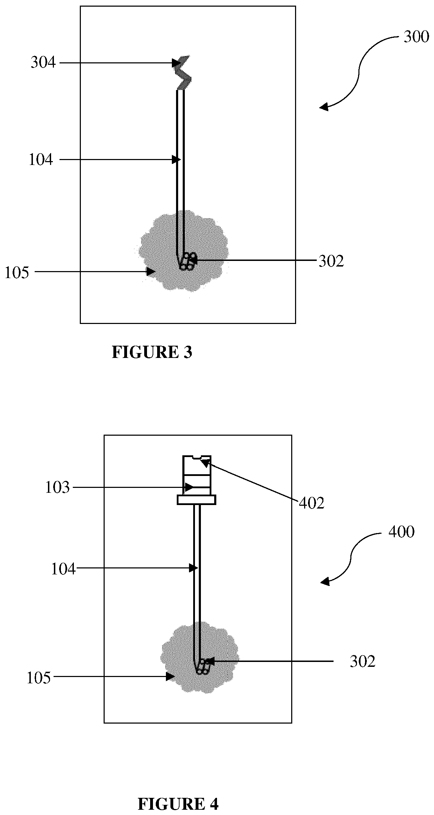

Referring to figure 3, a first end 302 and a second end 304 of a metal dauber applicator wire 104 is illustrated. The first end 302 may be shaped into a hook like structure to hold a cotton blob 105. Further, the second end 304 is shaped into a pattern, wherein the pattern is selected from a zig-zag, a sinuous, a tilted, a wave, or a S-curvature, a crooked structure, or an angular bend.

In an embodiment, as illustrated in figure 4, the metal dauber applicator wire 104 may be shaped in S-shape at the second end 304 and further molded into the holding means 103, wherein the holding means 103 is configured to snap fit into the cavity 102 of the cap 101. A hook at the first end 302 of metal dauber applicator wire 104 may be enabled to attach cotton blob 105 or any other applicator brush. In one embodiment, the depression 402 may be formed at the bottom surface of the holding means 103. The depression 402 may be linear depression. The depression 402 helps in ease of press fitting the holding means 103 into the cavity 102.

In an embodiment, the second end 304 of the metal dauber applicator wire 104 may be molded to the holding means 103 by over-molding, or plastic-to-metal molding process.

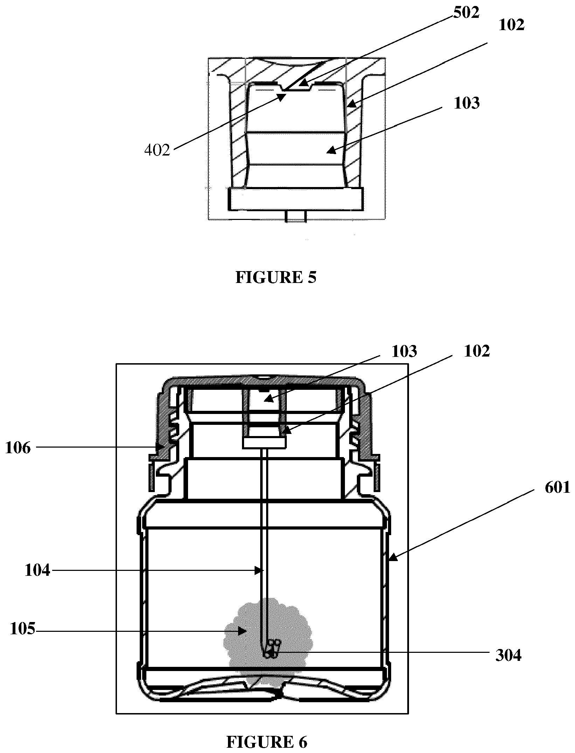

In one embodiment, refer to figure 5, the holding means 103 of metal dauber applicator wire 104 may be fitted to the cavity 102 of the cap 101 by any one of the press fitting, snap fitting, fastening, snap-fastening, force fitting, interlock, lock and key fitting method. In one embodiment, the cap 101 may be made of polymeric material with pilfer proof ring, inbuilt plug and the cavity 102. In one embodiment, the cavity 102 may comprise a swelling 502. The swelling 502 may be configured to exactly match the shape of the depression 402. After the holding means 103 is pressed into the cavity 102, the swelling 502 and the depression 402 perfectly fit such that the circular motion of the holding means 103 is prevented even if the metal dauber applicator wire 104 is bent during application.

In one embodiment, the plastic material of the cap 101, cavity 102 and holding means 103 may be molded from a thermoplastic polymeric material, High density polyethylene (HDPE), low density polyethylene (LDPE), Polyethylene, polypropylene, polyvinyl chloride, polystyrene, polybenzimidazole, acrylic, nylon and Teflon, ethylene vinyl alcohol (EVOH). Further, the holding means 103 may be of a cylindrical shape, which may be fastened/ press-fitted into the cavity 102 in the cap 101.

Referring to figure 6, a plastic multilayer container 601 is illustrated. In one embodiment, the plastic multilayer container 601 with a metal dauber applicator wire 104 and cap 101 is described. The plastic multilayer container 601 may comprise a five-layer assembly further facilitating durability to the container 601. The plastic multilayer container 601 may comprise rust resistance, non-reactivity to inner solvent cement, chemical resistance, dent proof properties and longer shelf life of the inner solvent up to 2-3 years of storage.

In one embodiment, the plastic multilayer container 601 may by of solvent storage capacity and size of 1 ml to 1200 ml and more particularly, stock kipping units of 50ml, 100ml, 250ml, 500ml and 1 litre containers.

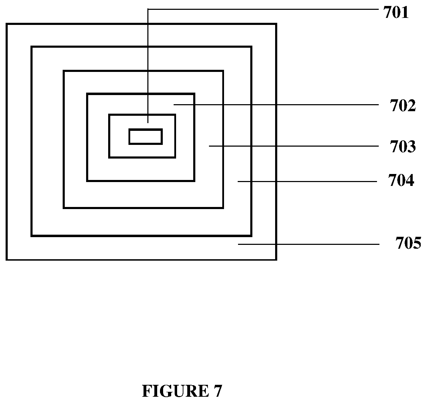

Referring now to figure 7, layers 700 of the plastic multilayer container 601, are illustrated. The plastic multilayer container 601 may comprise a first layer inner layer 701 of solvent resistant, chemical resistant thermoplastic polymeric layer, nylon, ethylene vinyl alcohol (EVOH), wherein the polymeric material is non-reactive with cement/primer solvent material. The plastic multilayer container may comprise a second tie layer 702 of thermoplastic resin polymer. The plastic multilayer container may comprise a third central layer 703 of mixture of a high-density polyethylene (HDPE), a thermoplastic polymer and a thermoplastic adhesive resin polymer, wherein the central third layer 703 may improve the shelf life and durability of the solvent cement inside the container. In one embodiment, central third layer 703 is composed of waste material obtained during blow mounding of the plastic multilayer container 601. The same waste material is reused as central third layer 703. The plastic multilayer container may comprise a fourth layer 704 of tie layer, wherein the tie layer may comprise of adhesive resin polymer. The plastic multilayer container may further comprise a fifth outer layer 705 of thermoplastic high-density polyethylene (HDPE).

In one embodiment the thickness of the first inner layer 701 may range within 40-50 micron. In one embodiment the thickness of the second 702 and fourth 704 tie layer may range within 20-30 micron. The thickness of the third central layer 703 comprising mixture of thermoplastic high-density polyethylene (HDPE), chemical resistant thermoplastic polymeric material and thermoplastic adhesive resin tie layer may range within 350-500 micron. The thickness of fifth layer 705 (outer layer of the container) may range within 400-600 microns. The thickness of the layers of the container may further vary depending upon the size of the stock kipping units (size of bottles/closures/container) as per sizes of containers such as 50ml, 100ml, 250ml, 500ml and 1000 ml.

In one embodiment, the inner layer of solvent resistant, chemical resistant thermoplastic polymeric material may include but not limited to high density polyethylene (HDPE), low density polyethylene (LDPE), Polyethylene, polypropylene, polyvinyl chloride, polystyrene, polybenzimidazole, acrylic, nylon and Teflon, ethylene vinyl alcohol (EVOH), Cellulose, and Chlorinated polyvinyl chloride.

In one embodiment the second 702 and the fourth 704 tie layer may comprise an intermediate adhesive resin material. The tie layer polymeric material may include but not limited to Adhesive Resins, Ethylene-vinyl acetate (EVA), Ethylene-methyl acrylate (EMA), Ethylene-acrylic acid (EAA), and Ethylene-grafted-maleic anhydride (AMP), Modified Polyolefins and the like.

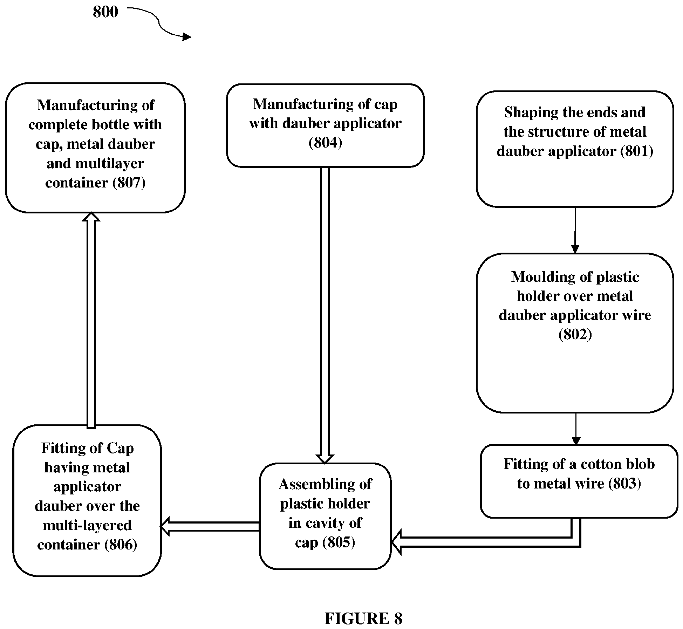

Referring to figure 8, a method 800 of manufacturing of complete bottle assembly comprising a cap 101 with metal dauber applicator wire 104 and plastic multilayer container 601 is described. The method comprises a first step 801 of Shaping of metal dauber applicator wire 104. The method comprises a second step 802 of moulding of holding means 103 over metal dauber applicator wire 104. The method comprises a third step 803 of fitting of a cotton blob to metal wire. The method comprises a fourth step 804 of manufacturing of cap with dauber applicator. The method comprises a fifth step 805 of assembling of holding means 103 in a cavity 102 of a cap 101. The method may comprise a sixth step 806 of fitting of the cap cavity 101 assembled with metal dauber applicator wire 104 over the plastic multi-layered container 601. The method thereby may comprise a seventh step 807 of manufacturing of complete bottle with cap, metal dauber and plastic multilayer container.

In one embodiment, the five-layer container 601 and other plastic materials described in the present disclosure may be manufactured by molding, roll-to roll molding, injection molding, extrusion molding, roll and blow molding, stretch blow molding and coextrusion processes.

In one exemplary embodiment, the solvent cement inside the multilayer container 601 may comprise a wide range of gluing materials, adhesives materials, binders, cosmetics, primers, solvents, heavy body solvent cement, sealants, sealing agents, cement paste, grease, and liquids.

In one embodiment, shaping the second end 304 of the metal dauber applicator wire 104 into a pattern and molding the holding means 103 over the second end 304 may provide a strong fixation of the metal dauber applicator wire 104, and may permit the slipping out of the metal dauber applicator wire 104 from the holding means 103.

## Claims

1. A dauber applicator, comprising:
a container cap 101;
a dauber metal applicator wire 104, wherein the metal applicator wire 104 comprises a first end 302 and a second end 304, the first end 302 is shaped to hold a cotton blob 105, **characterized in that** the second end 304 is shaped into a pattern selected from a zig-zag pattern, a sinuous, a tilt, a wave, a S-shaped, a crooked structure, and angular bend, wherein a holding means 103 is moulded over the second end 304, and wherein the holding means 103 is shaped for fitting in a cavity 102 within the container cap 101.

2. The dauber applicator as claimed in claim 1, wherein the first end 302 is hook shaped for holding a cotton blob 105.

3. The dauber applicator as claimed in claim 1, wherein the holding means 103 is a plastic holder of cylindrical shape.

4. The dauber applicator as claimed in claim 1, wherein the container cap comprises an internal threading 106 and is configured to screw fitted to a container 601 providing closing means to the container.

5. The dauber applicator as claimed in claim 1, wherein the cavity 102 is in a hollow cylindrical form.

6. The dauber applicator as claimed in claim 1, wherein the holding means 103 is shaped for press fitting, snap fitting, fastening, snap-fastening, force fitting, interlock, lock and key fitting in the cavity.

7. The dauber applicator as claimed in claim 1, wherein the holding means 103 is configured to fit into grooves of the cavity 102 via interference fit.

8. The dauber applicator as claimed in claim 5, wherein the material of the holding means 103 is selected from a group of a thermoplastic polymeric material, High density polyethylene (HDPE), low density polyethylene (LDPE), Polyethylene, polypropylene, polyvinyl chloride, polystyrene, polybenzimidazole, acrylic, nylon and Teflon, and ethylene vinyl alcohol (EVOH).

9. The dauber applicator as claimed in claim 1, wherein the holding means is moulded over the second end 304 of the metal dauber applicator wire 104 by over-moulding process.

10. A method for manufacturing a dauber applicator assembly, the method comprising steps of:
shaping, a metal dauber applicator wire 104, wherein first end 302 of the metal dauber applicator wire 104 is formed into a hook shape and the second end 304 is shaped into a pattern selected from a zig-zag pattern, a sinuous, a tilt, a wave, a S-shaped, a crooked structure, and angular bend;
molding, a holding means 103 over metal dauber applicator wire 104, wherein the holding means is molded over the second end 304 of the metal dauber applicator wire 104;
fitting, a cotton blob 105 to metal dauber applicator wire 104, wherein the cotton blob 105 is fitted to the first end 302 of metal dauber applicator wire 104;
fastening, the holding means 103 in a cavity 102 of a cap 101 by atleast one of snap fitting, press fitting, snap fitting, fastening, snap-fastening, force fitting, interlock, lock and key fitting in the cavity 101; and
assembling, the cap cavity 101 assembled with metal applicator dauber 104 over a plastic multi-layered container 601.

## Patentansprüche

1. Ein Sprühkopf-Applikator,
umfassend: eine Behälterkappe101;
einen Dauber-Metallapplikatordraht 104, wobei der Metallapplikatordraht 104 ein erstes Ende 302 und ein zweites Ende 304 umfasst, wobei das erste Ende 302 so geformt ist, dass es einen Wattebausch 105 hält, **dadurch gekennzeichnet, dass** das zweite Ende 304 zu einem Muster geformt ist, das aus einem Zick-Zack-Muster, einer gewundenen, einer geneigten, einer wellenförmigen, einer S-förmigen, einer krummen Struktur und einer winkligen Biegung ausgewählt ist, wobei ein Haltemittel 103 über dem zweiten Ende 304 geformt ist, und wobei das Haltemittel 103 so geformt ist, dass es in einen Hohlraum 102 innerhalb der Behälterkappe 101 passt.

2. Dauber-Applikator nach Anspruch 1, wobei das erste Ende 302 hakenförmig ist, um einen Wattebausch 105 zu halten.

3. Dauber-Applikator nach Anspruch 1, wobei das Haltemittel 103 ein zylindrischer Kunststoffhalter ist.

4. Applikator nach Anspruch 1, wobei die Behälterkappe ein Innengewinde 106 aufweist und so konfiguriert ist, dass sie auf einen Behälter 601 aufgeschraubt werden kann, um ein Verschlussmittel für den Behälter bereitzustellen.

5. Dauber-Applikator nach Anspruch 1, wobei der Hohlraum 102 eine hohlzylindrische Form aufweist.

6. Applikator nach Anspruch 1, wobei das Haltemittel 103 zum Einpressen, Einschnappen, Befestigen, Einrasten, Press-Passen, Verrasten, Verriegeln oder Schließ-Passen in den Hohlraum ausgebildet ist.

7. Dauber-Applikator nach Anspruch 1, wobei das Haltemittel 103 so gestaltet ist, dass es durch Presspassung in Nuten des Hohlraums 102 passt.

8. Dauber-Applikator nach Anspruch 5, wobei das Material des Haltemittels 103 aus einer Gruppe von thermoplastischem Polymermaterial, Polyethylen hoher Dichte (HDPE), Polyethylen niedriger Dichte (LDPE), Polyethylen, Polypropylen, Polyvinylchlorid, Polystyrol, Polybenzimidazol, Acryl, Nylon und Teflon sowie Ethylenvinylalkohol (EVOH) ausgewählt ist.

9. Dauber-Applikator nach Anspruch 1, wobei das Haltemittel über das zweite Ende 304 des Metalldrahtes des Dauber-Applikators 104 durch ein Umspritzverfahren gegossen wird.

10. Verfahren zur Herstellung einer Dauber-Applikatoranordnung, wobei das Verfahren die folgenden Schritte umfasst:
Formgebung eines Metallkugel-Applikatordrahtes 104, wobei das erste Ende 302 des Metallkugel-Applikatordrahtes 104 in eine Hakenform geformt ist und das zweite Ende 304 in ein Muster geformt ist, das aus einem Zick-Zack-Muster, einem gewundenen Muster, einer Neigung, einer Welle, einer S-förmigen Struktur, einer krummen Struktur und einer winkeligen Biegung ausgewählt ist;
Formen eines Haltemittels 103 über den metallischen Dauber-Applikationsdraht 104, wobei das Haltemittel über das zweite Ende 304 des metallischen Dauber-Applikationsdrahtes 104 gegossen wird;
Anbringen eines Wattebausches 105 an den Applikator-Metalldraht 104, wobei der Wattebausch 105 an dem ersten Ende 302 des Applikator-Metalldrahtes 104 angebracht wird;
Befestigen des Haltemittels 103 in einem Hohlraum 102 einer Kappe 101 durch mindestens eines der folgenden Verfahren: Einpressen, Einschnappen, Befestigen, Einrasten, Press-Passen, Verrasten, Verriegeln oder Schließ-Passen in den Hohlraum; und
Zusammenbau, wobei die Kappe 101 mit dem Metall-Applikator 104 über einen mehrschichtigen Kunststoffbehälter 601 montiert wird.

## Revendications

1. Applicateur à daube, comprenant :
comprenant: un bouchon de récipient 101 ;
un fil métallique applicateur 104, dans lequel le fil métallique applicateur 104 comprend une première extrémité 302 et une deuxième extrémité 304, la première extrémité 302 est formée pour contenir un blob de coton 105, **caractérisé en ce que** la deuxième extrémité 304 est formée dans un motif choisi parmi un motif en zigzag, un sinueux, une inclinaison, une vague, une structure en S, une structure tordue et une courbure angulaire, dans lequel un moyen de maintien 103 est moulé sur la deuxième extrémité 304, et dans lequel le moyen de maintien 103 est formé pour s'adapter à une cavité 102 à l'intérieur du bouchon du récipient 101.

2. L'applicateur dauber selon la revendication 1, dans lequel la première extrémité 302 est en forme de crochet pour tenir une boule de coton 105.

3. Applicateur de tampon selon la revendication 1, dans lequel le moyen de maintien 103 est un support en plastique de forme cylindrique.

4. Applicateur de daube selon la revendication 1, dans lequel le bouchon du récipient comprend un filetage interne 106 et est configuré pour être vissé à un récipient 601 fournissant des moyens de fermeture au récipient.

5. Applicateur de tampon selon la revendication 1, dans lequel la cavité 102 a une forme cylindrique creuse.

6. Applicateur de daube selon la revendication 1, dans lequel le moyen de maintien 103 est conçu pour un montage par pression, un montage par encliquetage, une fixation, un montage par enclenchage, un montage par force, un verrouillage, une serrure et un montage par clé dans la cavité.

7. Applicateur de daube selon la revendication 1, dans lequel le moyen de maintien 103 est configuré pour s'insérer dans les rainures de la cavité 102 par ajustement serré.

8. Applicateur de tampon selon la revendication 5, dans lequel le matériau du moyen de maintien 103 est choisi dans un groupe de matériaux polymères thermoplastiques, polyéthylène haute densité (HDPE), polyéthylène basse densité (LDPE), polyéthylène, polypropylène, chlorure de polyvinyle, polystyrène, polybenzimidazole, acrylique, nylon et Téflon, et alcool éthylène-vinyle (EVOH).

9. Applicateur dauber selon la revendication 1, dans lequel le moyen de maintien est moulé sur la deuxième extrémité 304 du fil métallique 104 de l'applicateur dauber par un processus de surmoulage.

10. Méthode de fabrication d'un applicateur de daube, comprenant les étapes suivantes :
la mise en forme, un fil métallique applicateur 104, dans lequel la première extrémité 302 du fil métallique applicateur 104 a la forme d'un crochet et la deuxième extrémité 304 a la forme d'un motif choisi parmi un motif en zigzag, un motif sinueux, une inclinaison, une vague, une structure en S, une structure tordue et une courbure angulaire ;
moulage d'un moyen de maintien 103 sur le fil métallique applicateur 104, le moyen de maintien étant moulé sur la deuxième extrémité 304 du fil métallique applicateur 104 ;
en fixant un tampon de coton 105 au fil métallique applicateur 104, le tampon de coton 105 étant fixé à la première extrémité 302 du fil métallique applicateur 104 ;
fixer le moyen de maintien 103 dans une cavité 102 d'un capuchon 101 par au moins un des moyens suivants : encliquetage, une fixation, un montage par enclenchage, un montage par force, un verrouillage, une serrure et un montage par clé dans la cavité ; et
assemblage, la cavité du bouchon 101 étant assemblée avec un applicateur métallique 104 sur un récipient multicouche en plastique 601.
